# EUROPEAN PATENT APPLICATION

(11) **EP 4 711 670 A1**
(43) Date of publication of application: **18.03.2026**
(21) Application number: 24803429.0
(22) Date of filing: 01.05.2024
(51) Int. Cl.: F21S 43/20, B60Q 1/24, B60Q 1/50, F21S 41/143, F21W 103/10, F21W 103/20, F21W 103/55, F21W 103/60, F21Y 115/10

(54) **PROJECTION DEVICE**

(30) Priority: 08.05.2023 JP 2023076429
(71) Applicant: Koito Manufacturing Co., Ltd., Shinagawa-ku, Tokyo 141-0001 (JP)
(72) Inventor: TANI, Kentaro, Shizuoka-shi, Shizuoka 424-8764 (JP)
(74) Representative: Cabinet Beau de Loménie
(86) International application number: PCT/JP2024/016747
(87) International publication number: WO 2024/232317

(57) **Abstract**

The present invention provides a projection device that prevents glare with respect to irradiation light of a turn signal lamp and suppress a reduction in brightness of a light pattern to be projected. A long-distance side projection unit 2 which is mounted on a vehicle and projects a prescribed long-distance side light pattern to a relatively long-distance position of a surrounding road surface, and a short-distance side projection unit 3 which projects a prescribed short-distance side light pattern to a relatively short-distance position are arranged in a housing 100. The long-distance side projection unit 2 and the short-distance side projection unit 3 are respectively provided with projection lenses 24, 34 for projecting light patterns, and at least the projection lens 24 of the long-distance side projection unit 2 is arranged at a position retreated with respect to the projection direction from the projection lens 34 of the short-distance side projection 3.

## Description

### TECHNICAL FIELD

The present invention relates to a projection device to be mounted on a vehicle and suitable for projecting and drawing a required light pattern on a road surface of a road.

### BACKGROUND ART

In recent years, there has been proposed a technique of projecting a light pattern onto a road surface around an automobile to increase attention attracting power to other vehicles and pedestrians for the purpose of ensuring traffic safety during traveling of the automobile. As a projection device that projects such a light pattern, for example, Patent Literature 1 proposes a technique in which a shade opening of a required shape is disposed in front of a light emitting element serving as a light source, and the light pattern formed by the shade opening is projected by a projection lens. Patent Literature 1 also proposes a technique in which a plurality of light sources and a plurality of shade openings are arranged to project a plurality of light patterns from a single projection device.

### CITATION LIST

### PATENT LITERATURE

Patent Literature 1: JP2023-028932A

### SUMMARY OF INVENTION

### TECHNICAL PROBLEM

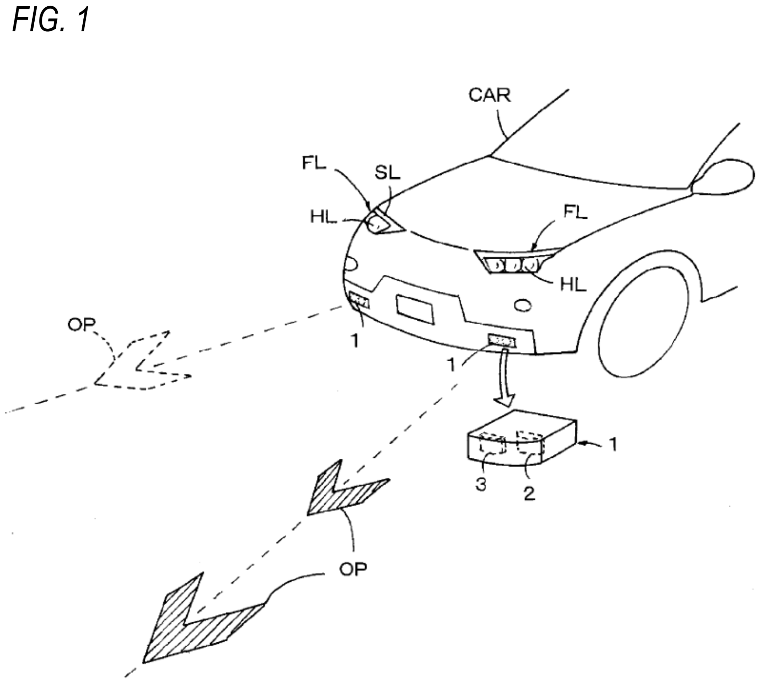

As illustrated in FIG. 1, this type of projection device is often disposed below a front lamp FL of an automobile CAR. In this example, the projection device 1 is disposed at a position near a front bumper of the automobile CAR, and is configured to project a light pattern OP onto a road surface in front of the automobile. By projecting the light pattern OP indicating a traveling direction on the road surface in front of the automobile CAR, other vehicles, pedestrians, and the like ahead of or in front of the automobile CAR are notified of the traveling direction of the automobile, thereby contributing to traffic safety. For example, when an auxiliary lamp SL forming a part of the front lamp FL is turned on (blinks) as a turn signal lamp, the light pattern OP is projected in synchronization with the turn signal lamp, so that the traveling direction of the automobile can be indicated by light irradiation of the turn signal lamp and the light pattern OP by the projection device 1, and the traffic safety can be improved.

When the light pattern is projected in synchronization with the lamp as described above, a part of light emitted from the projection device enters a light irradiation region of the lamp, and the entering light may adversely affect normal light irradiation of the lamp as glare light. Although details will be described later, in the example of FIG. 1, a part of the light projected from the projection device 1 that is directed upward enters the light irradiation region of the front lamp FL (auxiliary lamp SL) disposed above as the glare light.

In order to prevent such glare light, it is conceivable that the projection device may be provided with a light blocking unit such as a hood or shade in front of the projection lens to block light that does not contribute to the projection of the light pattern (non-pattern light), particularly light directed upward where the front lamps FL are disposed, among the light projected from the projection lens. However, the light blocking unit increases the number of independent components required to form the projection device, which makes the structure complicated and increases the cost. In addition, the light blocking unit may also block a part of the light forming the light pattern, which reduces an amount of light of the projected light pattern and causes a decrease in brightness of the light pattern.

An object of the present invention is to provide a projection device that prevents glare to irradiation light of a lamp and suppresses a decrease in brightness of a light pattern to be projected.

### SOLUTION TO PROBLEM

A projection device according to a first aspect of the present invention is a projection device to be mounted on a vehicle to project a light pattern onto a surrounding road surface, in which a long-distance side projection unit configured to project a predetermined long-distance side light pattern to a relatively long-distance position and a short-distance side projection unit configured to project a predetermined short-distance side light pattern to a relatively short-distance position are disposed in a housing. The long-distance side projection unit and the short-distance side projection unit each include a projection lens for projecting a light pattern, and at least the projection lens of the long-distance side projection unit is disposed at a position retracted from the projection lens of the short-distance side projection unit in a projection direction.

A projection device according to a second aspect of the present invention is a projection device to be mounted on a vehicle to project a light pattern onto a surrounding road surface, in which a long-distance side projection unit configured to project a predetermined long-distance side light pattern to a relatively long-distance position and a short-distance side projection unit configured to project a predetermined short-distance side light pattern to a relatively short-distance position are disposed in a housing. The long-distance side projection unit and the short-distance side projection unit each include a projection lens for projecting a light pattern, and the projection lens of the long-distance side projection unit has a lens surface area smaller than that of the projection lens of the short-distance side projection unit. For example, the projection lens of the long-distance side projection unit has a configuration in which at least one side portion of a circular lens having a required spherical surface or aspherical surface is cut off.

As a preferred embodiment of the projection device according to the present invention, the long-distance side projection unit and the short-distance side projection unit each include: a light source part having a light emitting element configured to emit light; a primary lens configured to condense the light emitted from the light source part; a shade having a shade opening for shaping the condensed light into a predetermined beam shape; and a projection lens configured to project light transmitted through the shade opening onto a road surface.

Further, in the present invention, it is preferable that the projection device is applied as a projection device that is disposed at a position below a lamp mounted on the vehicle and configured to emit predetermined light, and projects a light pattern in synchronization with light emission of the lamp. For example, the lamp is an auxiliary lamp including a turn signal lamp of the vehicle.

### ADVANTAGEOUS EFFECTS OF INVENTION

According to the present invention, by disposing at least the projection lens of the long-distance side projection unit at a position deeper inside the housing than the projection lens of the short-distance side projection unit, or by making the lens surface area of the projection lens of the long-distance side projection unit smaller than that of the projection lens of the short-distance side projection unit, it is possible to suppress emission of non-pattern light particularly from the projection lens of the long-distance side projection unit toward the lamp, to prevent glare with respect to irradiation light of the lamp, and to suppress a decrease in brightness of the light pattern to be projected.

### BRIEF DESCRIPTION OF DRAWINGS

[FIG. 1] FIG. 1 is a schematic partial perspective view of an automobile equipped with a projection device according to an embodiment.
[FIG. 2A] FIG. 2A is a schematic plan view illustrating an operation of the projection device
[FIG. 2B] FIG. 2B is a schematic side view illustrating an operation of the projection device.
[FIG. 3] FIG. 3 is a schematic perspective view of the projection device according to a first embodiment.
[FIG. 4] FIG. 4 is a schematic plan view of the projection device according to the first embodiment.
[FIG. 5A] FIG. 5A is a schematic side view illustrating an optical path of a far field projection unit to explain an operation of the projection device according to the first embodiment.
[FIG. 5B] FIG. 5B is a schematic side view showing an optical path of a near and central field projection unit to explain an operation of the projection device according to the first embodiment.
[FIG. 6] FIG. 6 is a schematic side view illustrating operations and effects of the first embodiment.
[FIG. 7] FIG. 7 is a schematic perspective view of a projection device according to a second embodiment.
[FIG. 8] FIG. 8 is a schematic plan view of the projection device according to the second embodiment.
[FIG. 9] FIG. 9 is a schematic diagram illustrating an operation of a far field projection unit according to the second embodiment.
[FIG. 10] FIG. 10 is a schematic side view illustrating operations and effects of the second embodiment.

### DESCRIPTION OF EMBODIMENTS

Hereinafter, the embodiments of the present invention will be described with reference to the drawings. In the embodiments, as shown in FIG. 1, projection devices 1 are disposed at positions below front lamps FL disposed at a front portion of a vehicle body of an automobile CAR. Although only the front portion of the automobile CAR is illustrated in FIG. 1, the front lamps FL are disposed on the left and right sides of the automobile CAR, and the projection devices 1 are also disposed on the left and right sides of the automobile CAR correspondingly. The front lamp FL is configured as a composite lamp in which a head lamp HL and an auxiliary lamp SL are integrated. The auxiliary lamp SL is used as both a clearance lamp and a turn signal lamp, and may also be used as a daytime running lamp.

Each of the left and right projection devices 1 is configured to project a required light pattern in synchronization with lighting of the auxiliary lamps SL of the front lamps FL on the same left and right sides of the automobile CAR. Here, when either one of the left and right auxiliary lamps SL is turned on in a blinking state as a turn signal lamp, the projection device 1 on the corresponding side projects an inverted V-shaped light pattern OP onto a road surface in front of the automobile CAR in synchronization.

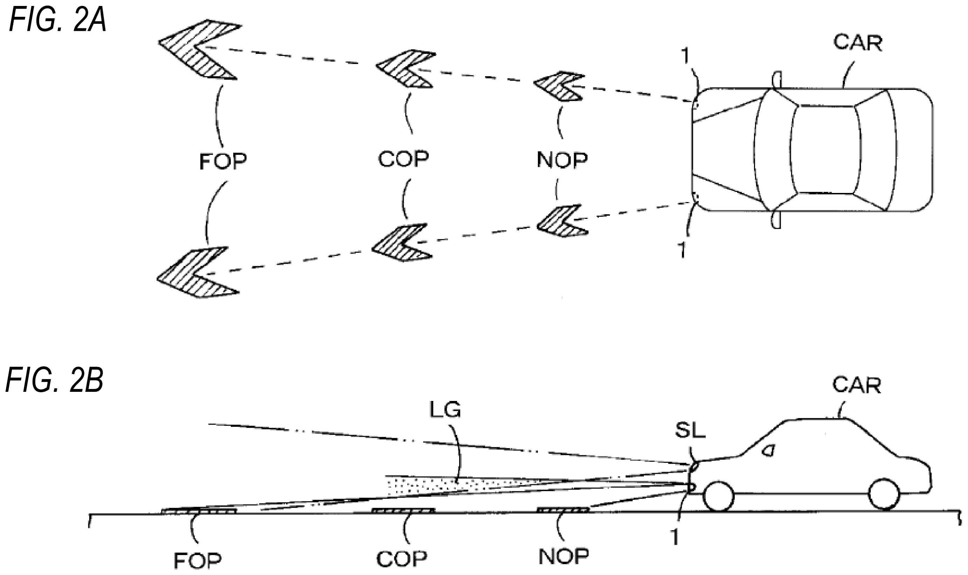

That is, as illustrated in the schematic plan view of FIG. 2A and the schematic side view of FIG. 2B, each of the left and right projection devices 1 is configured to project the inverted V-shaped light pattern OP along a virtual straight line (broken line) extending slightly outward and obliquely forward in a vehicle width direction with respect to a straight traveling direction of the automobile CAR. In this example, each of the left and right projection devices 1 projects a nearby light pattern NOP, a central light pattern COP, and a far light pattern FOP as the inverted V-shaped light pattern along the virtual straight line to a nearby position just in front of the automobile, a central position slightly farther away than the nearby position, and a far position furthest from the automobile CAR. The distances from the automobile CAR to the nearby light pattern NOP, the central light pattern COP, and the far light pattern FOP are appropriately set, and for example, the distance to the far light pattern FOP is about 4 m.

### (First Embodiment)

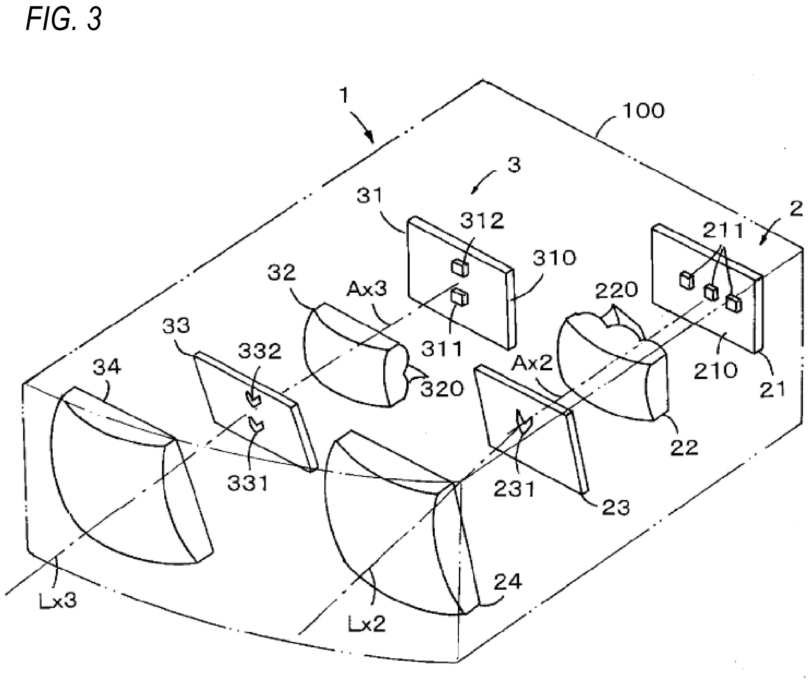

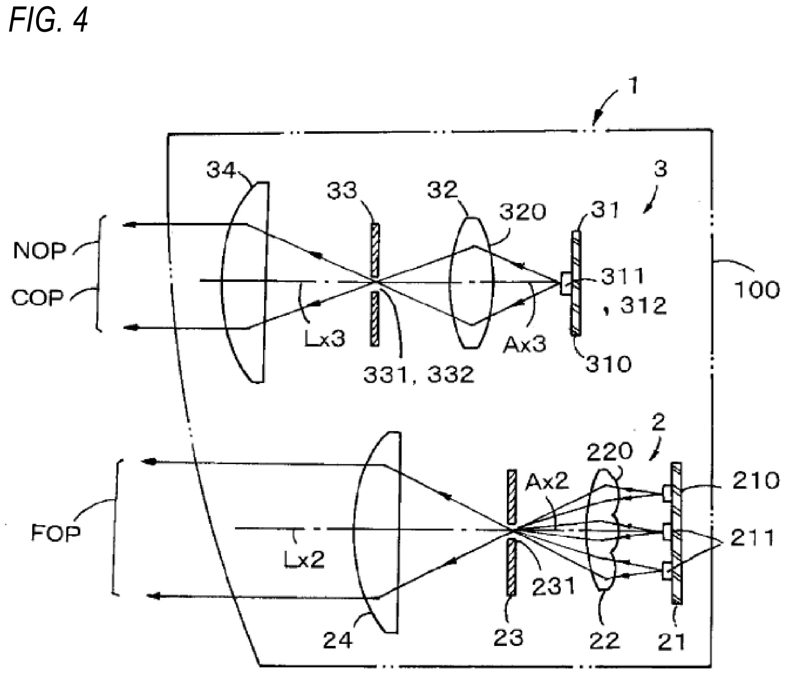

FIG. 3 is a perspective view showing a schematic configuration of the projection device 1 according to the first embodiment, and FIG. 4 is a schematic plan view of the same. The left and right projection devices 1 are symmetrical in a left-right direction, and the figure shows the left projection device 1 disposed in a left front portion of the vehicle body of the automobile CAR shown in FIG. 1. The projection device 1 includes a housing 100 that is long in a horizontal direction and that includes a body also serving as a heat sink and a light-transmitting front cover attached to a front opening of the body, and two projection units 2 and 3 are integrally incorporated within the housing 100 and aligned in the vehicle width direction. In the first embodiment and a second embodiment to be described later, the detailed configuration of the housing 100 and a specific support structure for the projection units 2 and 3 disposed in the housing 100 are not illustrated and described.

The two projection units 2 and 3 are arranged side by side in the vehicle width direction in the housing 100, and are configured as a far field projection unit 2 that is disposed on an outer side in the vehicle width direction (right side in FIG. 3) and projects the far light pattern FOP, and a near and central field projection unit 3 that is disposed on an inner side in the vehicle width direction (left side in FIG. 3) and simultaneously projects the nearby light pattern NOP and the central light pattern COP.

The projection units 2 and 3 have basically the same configuration. The far field projection unit 2 includes a light source part 21 having a light emitting element that emits light, a primary lens 22 that temporarily condenses the light emitted by the light source part 21, a shade 23 that has a shade opening for forming a pattern from the light condensed by the primary lens 22, and a projection lens 24 that projects the patterned light onto a road surface as a light pattern. Similarly, the near and central field projection unit 3 includes a light source part 31, a primary lens 32, a shade 33, and a projection lens 34.

The light source parts 21 and 31, the primary lenses 22 and 32, the shades 23 and 33, and the projection lens 24 and 34 are each supported in the housing 100 by a support structure (not shown). Note that the primary lenses 22 and 32 and the projection lenses 24 and 34, which are heavy, are formed into substantially rectangular lenses obtained by cutting four peripheral edges of a circular lens in an arc shape in order to achieve weight reduction, and are preferably supported by the housing 100 at flange portions provided in the respective lenses, although not illustrated. Accordingly, support strength against vibrations and impacts caused by traveling of the automobile or the like is increased. Alternatively, although not shown, each of the projection units 2 and 3 may be configured such that each part including the light source part is integrally supported by a unit base provided separately, and each of the unitized projection units 2 and 3 is supported by the housing 100.

In the far field projection unit 2, the light source part 21 has a light source board 210 on which a required electric circuit is formed, and one or a plurality of (here, three) light emitting elements 211 are mounted side by side in the horizontal direction on a front surface of the light source board 210. The three light emitting elements 211 are implemented by light emitting diodes (LEDs) that emit light of a required color, for example, amber light, and a rectangular light emitting surface of each LED 211 faces forward. Although not illustrated, these LEDs 211 are electrically connected to a lighting control unit via an electric circuit formed on the light source board 210, and emit light when the auxiliary lamp SL is turned on as a turn signal lamp.

The primary lens 22 is configured as a compound biconvex lens in which two lens portions 220, each having own focal point, are integrally arranged side by side in a left-right direction. Each of the lens portions 220 is disposed to face one of the three LEDs 211, and the amber light emitted in a divergent state from each LED 211 is converged by each lens portion 220 and is condensed on a surface of the shade 23 as described later.

The shade 23 has a shade opening 231 formed in a part thereof. The shade opening 231 is disposed at a position where the amber light is condensed by the primary lens 22, and transmits the condensed amber light. That is, the primary lens 22 forms an image of pseudo light source of the LED 211 at the condensing position, and emits light patterned into an opening shape of the shade opening 231. The shade opening 231 is configured as a shape of the far light pattern FOP to be projected, that is, as a V-shaped opening, and the amber light transmitted through the shade opening 231 is formed into a light beam having an inverted V-shape beam shape (light beam shape).

The projection lens 24 is implemented by a spherical or aspherical single-convex lens, and may also be implemented by a biconvex lens or a meniscus convex lens, and is disposed such that the focal position thereof is positioned on the surface of the shade 23, that is, in the vicinity of the shade opening 231. Thus, the amber light transmitted through the shade opening 231 and formed into a V-shape by the shade opening 231 is projected as a substantially parallel light beam by the projection lens 24.

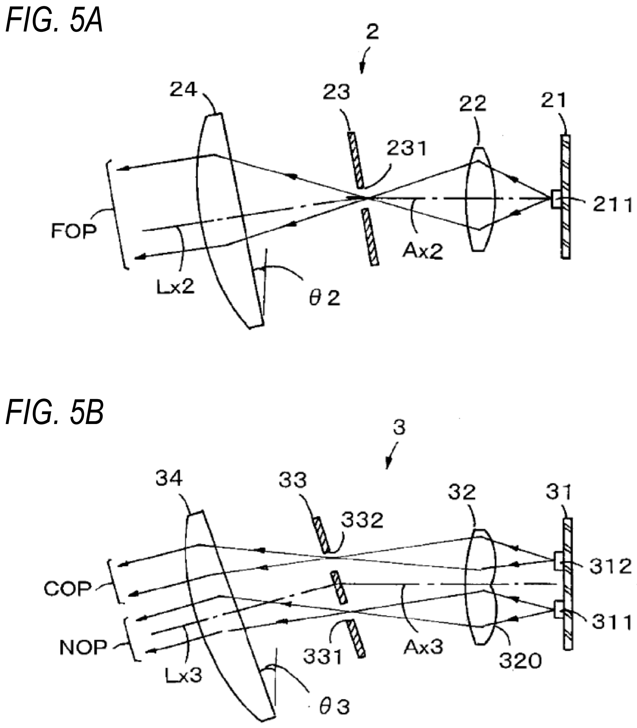

Here, as shown in the schematic side view of FIG. 5A, the shade 23 is oriented parallel to a main surface of the projection lens 24, and the main surface of the projection lens 24 is inclined downward and forward at a required angle θ2. That is, an optical axis Lx2 of the projection lens 24 intersects with an axis Ax2 connecting the centers of the light source part 21 and the primary lens 22 at the required angle θ2. The axis Ax2 and the optical axis Lx2 intersect with each other at a position on the surface of the shade 23. Accordingly, the amber light transmitted through the shade opening 231 is projected in a direction substantially along the optical axis Lx2 of the forward inclined projection lens 24, that is, toward a road surface far ahead of the automobile, and the far light pattern FOP is projected onto the road surface.

Further, in the near and central field projection unit 3, the light source part 31 includes two LEDs 311 and 312 that emit amber light mounted on a front surface of a light source board 310 as light emitting elements. The LEDs 311 and 312 are arranged with the lower LED 311 and the upper LED 312 disposed side by side vertically and with light emitting surfaces facing forward. Although not shown, each of the LEDs 311 and 312 is electrically connected to a lighting control unit via an electric circuit formed on the light source board 310, and emits light when the auxiliary lamp SL is turned on as a turn signal lamp.

The primary lens 32 is configured as a compound biconvex lens in which two lens portions 320, each having own focal point, are integrally arranged side by side in an upper-lower direction. Each of the lens portions 320 is disposed to face one of the two LEDs 311 and 312, and is configured such that the amber light emitted in a divergent state from each LED 311 is converged by each of the lens portions 320 and is condensed on a surface of the shade 33 as described later.

The shade 33 has a lower shade opening 331 and an upper shade opening 332 arranged vertically. These shade openings 331 and 332 are disposed at positions where the amber light is condensed by the lens portions 320 of the primary lens 32, and transmit the condensed amber light. That is, the primary lens 32 forms an image of pseudo light source of the LEDs 311 and 312 at the condensing positions, and emits light patterned into opening shapes of the shade openings 331 and 332. The shade opening 331 and 332 are formed to have the shape of the nearby light pattern NOP and the central light pattern COP to be projected, that is, as V-shaped openings. Thus, the amber light transmitted through each of the shade openings 331 and 332 is formed into a light beam having an inverted V-shape.

The projection lens 34 is implemented by a spherical or aspherical single-convex lens, and may also be implemented by a biconvex lens or a meniscus convex lens, and is disposed such that the focal position thereof is positioned on the surface of the shade 33, particularly in the vicinity of a vertical intermediate position of the shade openings 331 and 332. As a result, light beams of the amber light transmitted through the two shade openings 331 and 332 are projected as substantially parallel light beams.

Here, similarly to the far field projection unit 2, as shown in the schematic side view of FIG. 5B, the shade 33 is oriented parallel to a main surface of the projection lens 34, and the main surface of the projection lens 34 is inclined downward and forward at a required angle θ3. That is, an optical axis Lx3 of the projection lens 34 intersects with an axis Ax3 connecting the centers of the light source part 31 and the primary lens 32 at a required angle θ3, and the axis Ax3 and the optical axis Lx3 intersect with each other at a position on the surface of the shade 33.

The forward inclination angle θ3 of the projection lens 34 is larger than the forward inclination angle θ2 of the projection lens 24 of the far field projection unit 2. Thus, the amber light transmitted through the shade openings 331 and 332 is projected onto the road surface in front of the automobile along the optical axis Lx3 of the projection lens 34 that is inclined forward. That is, the central light pattern COP is projected onto a road surface closer than the far light pattern FOP, and the nearby light pattern NOP is projected onto a road surface closer than the central light pattern COP.

The far field projection unit 2 and the near and central field projection unit 3 having the above configuration are disposed in the housing 100 as described above, and in the first embodiment, the far field projection unit 2 is disposed at a position retreated to the rear of the automobile CAR with respect to the near and central field projection unit 3. That is, the far field projection unit 2 is disposed at a position deeper inside the housing 100 than the near and central field projection unit 3. Therefore, the projection lens 24 of the far field projection unit 2 is disposed at a position retreated from a front edge of the housing 100 with respect to the projection lens 34 of the near and central field projection unit 3.

According to the projection device 1 of the first embodiment having the above configuration, for example, when a traveling direction of the automobile CAR is changed, if the auxiliary lamp SL is turned on (blinked) as a turn signal lamp, the projection of the light pattern by the projection device 1 is performed at the same time. Hereinafter, optical paths when the projection device 1 performs projection will be described with reference to FIGS. 4 to 6. The optical paths in these drawings are simply shown for the purpose of description, and do not show actual optical paths in detail.

As shown in FIGS. 4 and 5, in the far field projection unit 2, the three LEDs 211 of the light source part 21 emit light at the same time, and the amber light of each LED 211 is condensed into the shade opening 231 by the primary lens 22, and is transmitted through the shade opening 231 in a combined state. At this time, the amber light is shaped into a light beam having the shape of the shade opening 231, that is, a V-shaped beam shape, and is projected by the projection lens 24 onto the road surface far ahead of the automobile. As a result, as shown in FIG. 2A and FIG. 2B, the far light pattern FOP including the inverted V-shaped light pattern is projected onto the road surface.

In the near and central field projection unit 3, the two LEDs 311 and 312 of the light source part 31 emit light at the same time. The amber light from the LEDs 311 and 312 is condensed into two shade openings 331 and 332 by the lens portions 320 of the primary lens 32, respectively, and is further transmitted through the shade openings 331 and 332 to form two light beams having a V-shaped beam shape. These light beams are projected onto the road surface near and at the center of the automobile by the projection lens 34, so that the nearby light pattern NOP and the central light pattern COP each formed of an inverted V-shaped light pattern are projected onto the road surface as shown in FIG. 2A and FIG. 2B.

As described above, by projecting the light pattern OP in synchronization with the lighting (blinking) of the turn signal lamp, the traveling direction of the automobile can be displayed by the light irradiation of the turn signal lamp and the light pattern OP by the projection device 1, thereby drawing the attention of other vehicles and pedestrians and improving the traffic safety. In particular, by projecting the far light pattern FOP far ahead of the automobile CAR, it is possible to reliably draw the attention of other vehicles and pedestrians present in the far front, and it is possible to improve safety.

When such a light pattern is projected, light that does not contribute to the projection of the light pattern (hereinafter, referred to as non-pattern light) may be emitted from the projection lens 24, 34 in each of the projection units 2 and 3. Then, when the non-pattern light is emitted from the projection lens 24, 34 to an upper region at an angle equal to or greater than a required angle, as shown in FIG. 2B , the non-pattern light becomes glare light LG that enters an irradiation light region of the auxiliary lamp SL, that is, the turn signal lamp, disposed above the projection device 1.

In the projection device 1, the forward inclination angle θ3 of the near and central field projection unit 3 with respect to the optical axis Lx3 of the projection lens 34 is set to be larger than the forward inclination angle θ2 of the far field projection unit 2. Therefore, the non-pattern light emitted upward from the projection lens 34 of the near and central field projection unit 3 has a restricted upward angle, and is less likely to become the glare light LG with respect to the irradiation light of the auxiliary lamp SL.

On the other hand, in the far field projection unit 2, since the forward inclination angle θ2 with respect to the optical axis Lx2 of the projection lens 24 is smaller than the forward inclination angle θ3 of the projection lens 34 of the near and central field projection unit 3, the non-pattern light emitted from the projection lens 24 is likely to be emitted toward the upper region, and is likely to be the glare light LG with respect to the irradiation light of the auxiliary lamp SL.

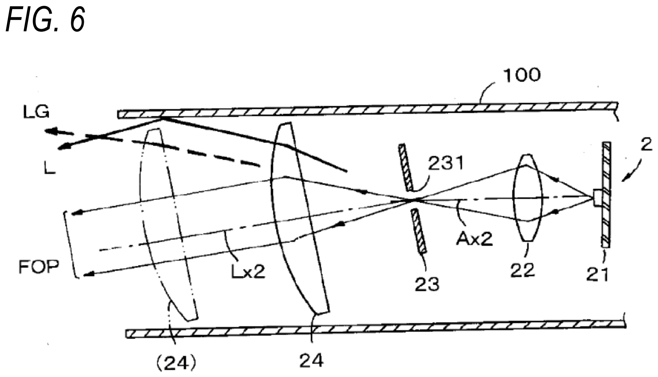

However, in the first embodiment, the far field projection unit 2 is disposed at a deep position in the housing 100, and the projection lens 24 is located at a position retreated from the front edge of the housing 100 as shown in FIG. 6. Therefore, the non-pattern light (thick solid arrow) L emitted from the projection lens 24 is blocked at the front edge of the housing 100, and is prevented or restrained from being projected upward. That is, in the far field projection unit 2, the non-pattern light is prevented from becoming the glare light LG with respect to the irradiation light of the auxiliary lamp SL. Incidentally, as indicated by the thick broken arrow in FIG. 6, if the projection lens 24 is not retreated to the rear of the housing 100, the non-pattern light is projected upward from the projection lens 24 and becomes the glare light LG.

In the first embodiment, since the far field projection unit 2 combines the light from the three LEDs 211 to project the far light pattern FOP, an amount of light in the far field projection unit 2 is increased. Therefore, even if a projection distance to the far light pattern FOP projected by the far field projection unit 2 disposed at a deep position in the housing 100 is longer than a projection distance of the nearby light pattern NOP or the central light pattern COP, it is possible to prevent the brightness of the far light pattern FOP from becoming relatively dark. On the contrary, by providing the three LEDs 211, the brightness of the far light pattern FOP is brighter than that of the nearby light pattern NOP and the central light pattern COP, and the attention attracting power to other vehicles and pedestrians in the distance is increased.

As described above, according to the projection device 1 of the first embodiment, by disposing the far field projection unit 2, which may project the non-pattern light that may cause glare light, at a deep position in the housing 100, it is possible to reduce the spread of the non-pattern light projected from the far field projection unit 2, and to prevent glare to the irradiation light of the auxiliary lamp SL disposed at an upper position of the projection device 1. Further, an independent hood or shade for preventing the projection of glare light is not required, so that the number of components of the projection device 1 can be prevented from increasing, and the structure of the projection device can be prevented from becoming complicated.

In the projection device according to the first embodiment, it is sufficient that at least the projection lens 24 of the far field projection unit 2 is disposed at a position deeper inside the housing 100 than the projection lens 34 of the near and central field projection unit 3. Therefore, arrangement positions of the light source part, the primary lens, and the shade are not particularly limited.

For example, in the first embodiment, the near and central field projection unit 3 is configured as one projection unit, but a near field projection unit and a central field projection unit may be configured as independent projection units. In this case, the arrangement position of each projection unit may be set such that the units face toward a depth direction of the housing in descending order of the forward inclination angle of the projection lens, that is, the near field projection unit, the central field projection unit, and the far field projection unit.

The far field projection unit 2 may be formed by combining a plurality of far field projection units. In this case, the plurality of far field projection units may be disposed at the same position in the depth direction in the housing, or may be disposed at different positions in the depth direction as appropriate.

### (Second Embodiment)

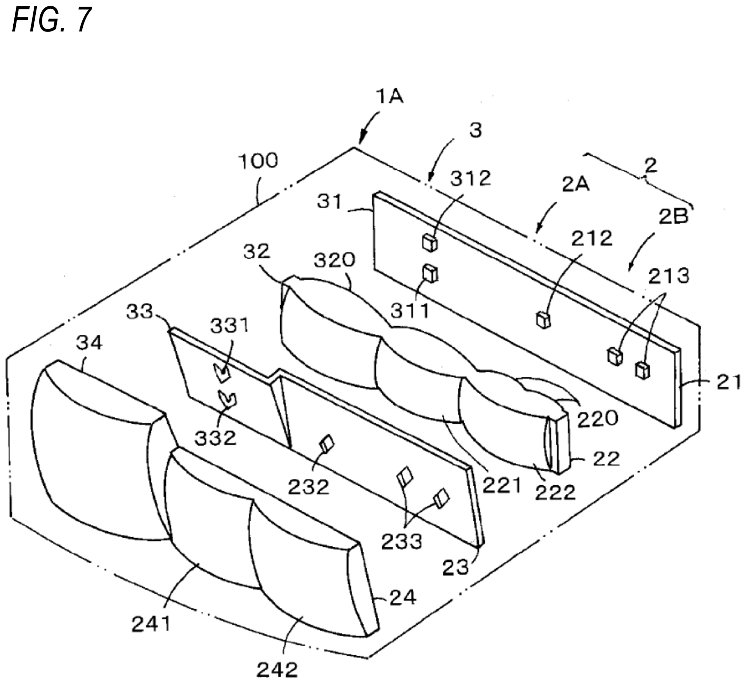

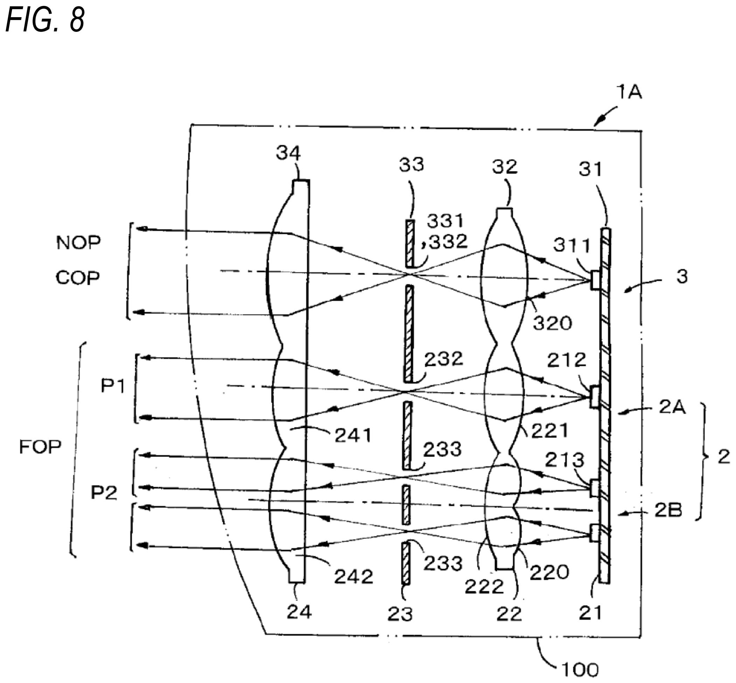

FIG. 7 is a perspective view showing a schematic configuration of a projection device 1A according to a second embodiment, and FIG. 8 is a schematic plan view of the same. As shown in FIG. 1, the projection device 1A is disposed in the left front portion of the vehicle body of the automobile CAR, which is the same as in the first embodiment. Further, the projection device 1A is the same as the first embodiment in that the far field projection unit 2 and the near and central field projection unit 3 are integrally assembled and aligned in the vehicle width direction in the housing 100 which is long in the horizontal direction and includes a light-transmitting front cover. Therefore, in the following description, portions equivalent to those of the first embodiment are denoted by the same reference numerals.

In the second embodiment, the far field projection unit 2 includes two far field projection units, that is, a first far field projection unit 2A and a second far field projection unit 2B. The three projection units including the first and second far field projection units 2A and 2B and the near and central field projection unit 3 are disposed in the housing 100 at substantially the same positions in the front-rear direction of the automobile, that is, in the depth direction of the housing 100. Hereinafter, the first and second far field projection units 2A and 2B may be collectively referred to as the far field projection unit 2.

Since the configuration of the near and central field projection unit 3 is basically the same as that of the first embodiment, detailed description thereof will be omitted. That is, the light source part 31 has two upper and lower LEDs 311 and 312 mounted on the front surface of the light source board 310, and the shade 33 is provided with two shade openings 331 and 332 arranged above and below. The projection lens 34 and the primary lens 32 having upper and lower lens portions 320 are provided to project the nearby light pattern NOP and the central light pattern COP.

A first far field projection unit 2A and a second far field projection unit 2B of the far field projection unit 2 have the same basic configuration, and each include the light source part 21, the primary lens 22, the shade 23, and the projection lens 24. Further, the first far field projection unit 2A includes one LED 212 in the light source part 21, while the second far field projection unit 2B includes two LEDs 213 arranged in the left-right direction. Further, the first far field projection unit 2A has one diamond-shaped first shade opening 232 formed in the shade 23, while the second far field projection unit 2B has two diamond-shaped second shade openings 233 disposed on the shade 23 in the horizontal direction.

The first far field projection unit 2A includes a first primary lens 221, and the first primary lens 221 is configured to condense amber light of the LED 212 onto the shade opening 232. The second far field projection unit 2B includes a second primary lens 222, and the second primary lens 222 has a configuration in which two lens portions 220 that condense amber light of two LEDs 213 onto two shade openings 233 are arranged on the left and right sides. A first projection lens 241 of the first far field projection unit 2A and a projection lens 242 of the second far field projection unit 2B are basically configured in the same way, and are configured to project amber light that has passed through the shade openings 232 and 233 onto the road surface.

In both the far field projection unit 2 and the near and central field projection unit 3, the projection lenses 24 (241, 242), 34 and the shades 23, 33 are arranged in parallel to each other as in the first embodiment. As in the first embodiment, the projection lenses are each inclined forward and downward at a required angle, that is, the projection lens 24 of the far field projection unit 2 is inclined forward and downward at the angle θ2, and the projection lens 34 of the near and central field projection unit 3 is inclined forward and downward at a larger angle θ3.

Here, as shown in FIG. 7, the projection lens 24 of the far field projection unit 2, that is, the first and second projection lenses 241 and 242 have a lens surface area smaller than that of the projection lens 34 of the near and central field projection unit 3. Here, the projection lens 24 is configured such that the dimension in a direction intersecting the optical axis, in this case the dimension in the upper-lower direction is short, and a height position of an upper edge of the projection lens 24 of the far field projection unit 2 is lower than the projection lens 34 of the near and central field projection unit 3. For example, the projection lens 24 is configured in the same manner as in the first embodiment, but an upper arc-shaped portion is cut off to a required size. In other words, of the spherical surface or the aspherical surface constituting a lens surface of the projection lens 24, an upper side portion, which is a portion where an inclination angle of the tangent plane (virtual plane tangent to the spherical surface) with respect to the horizontal direction is relatively smaller than that of the other surface, is cut off.

In the second embodiment, since the far field projection units 2A and 2B and the near and central field projection unit 3 are arranged in parallel in the housing 100, the light source part 21, 31, the primary lens 22, 32, the shade 23, 33, and the projection lens 24, 34 of each projection unit are configured as an integral component. In particular, the light source parts 21 and 31 have the corresponding LEDs 212 and 213 and the LEDs 311 and 312 mounted on a common light source board. Alternatively, at least one of the parts constituting the far field projection unit 2 and the near and central field projection unit 3, that is, at least one of the light source part, the primary lens, the shade, and the projection lens may be configured as independent components as in the first embodiment.

Similarly to the projection device 1 according to the first embodiment, in the projection device 1A according to the second embodiment, when a traveling direction of the automobile is changed, if the auxiliary lamp SL is turned on (blinked) as a turn signal lamp, the projection of the light pattern is performed at the same time. In the near and central field projection unit 3, the two LEDs 311 and 312 emit light at the same time, and the light from each of the LEDs 311 and 312 is condensed into the two shade openings 331 and 332 by the lens portions 320 of the primary lens 32, respectively, and becomes two light beams having a V-shaped beam shape when passing through. These light beams are projected onto the road surface near and at the center of the automobile by the projection lens 34, so that the nearby light pattern NOP and the central light pattern COP each formed of an inverted V-shaped light pattern are projected onto the road surface.

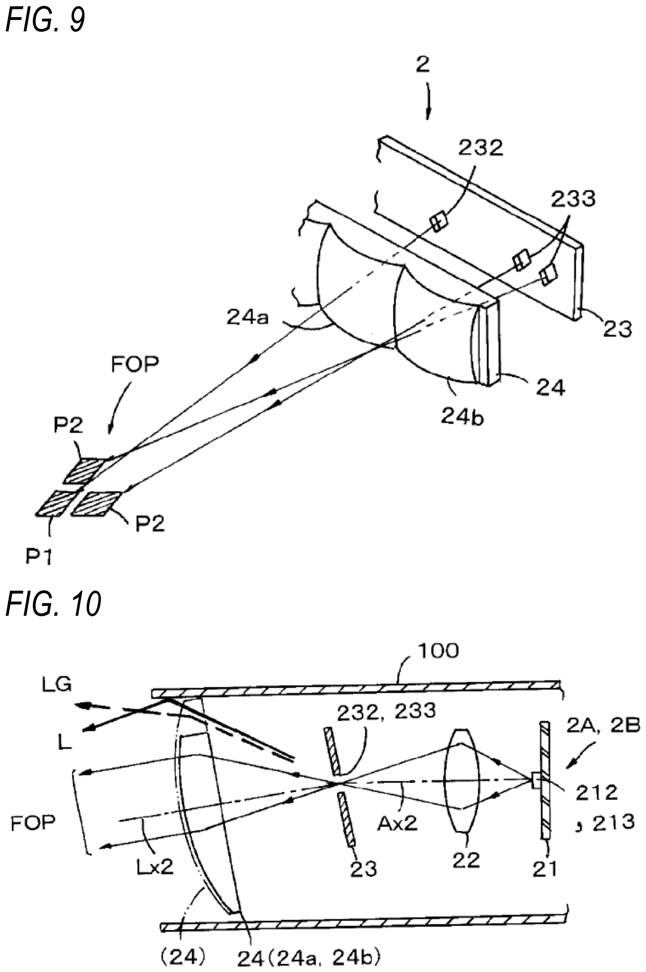

In the far field projection unit 2, as schematically shown in FIG. 9, in the first far field projection unit 2A, one LED 212 emits light, so that one diamond-shaped first light pattern P1 formed by the first shade opening 232 is projected onto the road surface by the projection lens 241. Further, in the second far field projection unit 2B, the two LEDs 213 emit light, so that two diamond-shaped second light patterns P2 formed by the two second shade openings 233 are projected onto the road surface by the projection lens 242. These three light patterns P1 and P2 are combined to form an inverted V-shaped far light pattern FOP as a whole.

As described above, in the far field projection unit 2, since the height dimension of the projection lens 24, that is, the first projection lens 241 and the second projection lens 242 is reduced and the lens surface area is reduced, an amount of light transmitted through each projection lens 241, 242 is reduced, but since the light transmitted through the two projection lenses 241 and 242 is combined to form the far light pattern FOP, the far light pattern FOP having brightness equal to or greater than that of the first embodiment is projected.

On the other hand, since the projection lens 24 of the first far field projection unit 2 has a height dimension lower than that of the projection lens 34 of the near and central field projection unit 3, as shown in FIG. 10, the non-pattern light (thick solid arrow) L emitted from the projection lens 24 is prevented from being emitted upward. That is, by cutting off the upper side portion of the projection lens 24, the non-pattern light directed upward through the upper side portion is emitted as is without being refracted, and is blocked by the front edge of the housing 100.

Accordingly, in the far field projection unit 2, the non-pattern light is prevented from becoming the glare light LG with respect to the irradiation light of the auxiliary lamp SL. Further, an independent hood or shade for preventing the projection of glare light is not required, so that an increase in the number of components of the projection device 1A and a complicated structure can be prevented. Incidentally, as indicated by a two-dot chain line in FIG. 10, if the upper side portion of the projection lens 24 is not cut off, the light is refracted at the upper side portion of the projection lens 24 as indicated by a thick broken line in the same drawing, which causes the non-pattern light to be projected upward in a required angle direction without being blocked by the housing 100, resulting in the glare light LG.

In the second embodiment, the first far field projection unit 2A and the second far field projection unit 2B may project the same light pattern, and these light patterns may be superimposed to form the far light pattern FOP. Even in this case, it is possible to eliminate the decrease in the amount of transmitted light caused by the reduction in the height dimension of the projection lens 24, and to project a far light pattern having the required brightness.

In the present invention, the projection device 1, 1A may be disposed on a side of the front lamp FL. In this case, in the projection device 1A according to the second embodiment, at least the projection lens of the long-distance side projection units 2A and 2B is constructed independently, and the dimension of each projection lens in the left-right direction is reduced. For example, one side portion of the projection lens on a side where the front lamp is present is cut off.

In the first and second embodiments described above, an example has been described in which the light patterns are projected at three different positions of the far light pattern, the central light pattern, and the nearby light pattern, but the present invention may be applied to a projection device that projects the light patterns onto at least two positions on a relatively short distance side and a relatively long distance side. That is, a long-distance side projection unit that projects a light pattern onto the long distance side is disposed at a position retreated in a projection direction with respect to a short-distance side projection unit that projects a light pattern onto the short distance side. Alternatively, the dimension of the projection lens of the long-distance side projection unit in the direction intersecting the optical axis is smaller than that of the projection lens of the short-distance side projection unit.

In the first embodiment, similarly to the second embodiment, the light source part, the primary lens, the shade, and the projection lens of the long-distance side projection unit and of the short-distance side projection unit may be integrally formed. Alternatively, the respective parts of the two projection units may be integrated into a sub-assembly using a coupling member or the like, and the integrated unit may be disposed in the housing. The primary lens may be formed of a reflector as long as it has a function of condensing light to form a pseudo light source. Alternatively, when a light emitting element that emits light of a parallel light flux having directivity is applied, the primary lens and the reflector may be omitted.

The present invention is not limited to the projection device for projecting a light pattern onto a road surface in front of the vehicle as described in the first and second embodiments. The present invention may also be applied to a projection device for projecting a light pattern toward the rear or side of a vehicle. Further, the present invention is also applicable to a case where the projection device is disposed on a side of a lamp.

The present international application claims priority based on Japanese Patent Application No. 2023-076429, which is a Japanese patent application filed on May 8, 2023, and all contents of Japanese Patent Application No. 2023-076429 are incorporated in the present international application.

The above description of a specific embodiment of the present invention is presented for the purpose of illustration. The above description is not intended to be exhaustive or to limit the present invention to the described aspects as they are. It is apparent to those skilled in the art that many modifications and changes can be made in light of the above description.

### REFERENCE SIGNS LIST

1, 1A: projection device
2: far field projection unit (long-distance side projection unit)
3: near and central field projection unit (short-distance side projection unit)
21, 31: light source part
22, 32: primary lens
23, 33: shade
24, 34: projection lens
210: lens portion
211, 212, 213: light emitting element (light source part: LED)
221, 222: first and second primary lenses
231, 232, 233: shade opening
241, 242: first and second projection lenses
311, 312: light emitting element (light source part: LED)
320: lens portion
331, 332: shade opening
OP: light pattern
FOP: far light pattern (long-distance side light pattern)
COP: central light pattern (short-distance side light pattern)
NOP: nearby light pattern (short-distance side light pattern)
P1: first light pattern
P2: second light pattern
CAR: automobile (vehicle)
SL: auxiliary lamp (turn signal lamp)
L: non-pattern light
LG: glare light

## Claims

1. A projection device configured to be mounted on a vehicle and configured to project a light pattern onto a surrounding road surface, the projection device comprising:
a long-distance side projection unit configured to project a predetermined long-distance side light pattern to a relatively long-distance position; and
a short-distance side projection unit configured to project a predetermined short-distance side light pattern to a relatively short-distance position,
wherein the long-distance side projection unit and the short-distance side projection unit are disposed in a housing of the projection device,
wherein each of the long-distance side projection unit and the short-distance side projection unit include a projection lens for projecting a light pattern, and
wherein at least the projection lens of the long-distance side projection unit is disposed at a position retracted from the projection lens of the short-distance side projection unit in a projection direction.

2. A projection device configured to be mounted on a vehicle and configured to project a light pattern onto a surrounding road surface, the projection device comprising:
a long-distance side projection unit configured to project a predetermined long-distance side light pattern to a relatively long-distance position; and
a short-distance side projection unit configured to project a predetermined short-distance side light pattern to a relatively short-distance position,
wherein the long-distance side projection unit and the short-distance side projection unit are disposed in a housing of the projection device,
wherein each of the long-distance side projection unit and the short-distance side projection unit include a projection lens for projecting a light pattern, and
wherein the projection lens of the long-distance side projection unit has a lens surface area smaller than that of the projection lens of the short-distance side projection unit.

3. The projection device according to claim 2, wherein the projection lens of the long-distance side projection unit has a configuration in which at least one side portion of a circular lens having a required spherical surface or aspherical surface is cut off.

4. The projection device according to any one of claims 1 to 3, wherein each of the long-distance side projection unit and the short-distance side projection unit include:
a light source part including a light emitting element configured to emit light;
a primary lens configured to condense the light emitted from the light source part;
a shade having a shade opening for shaping the condensed light into a predetermined beam shape; and
a projection lens configured to project light transmitted through the shade opening onto a road surface.

5. The projection device according to claim 4,
wherein the projection device is configured to be disposed at a position below a lamp mounted on the vehicle, the lamp is configured to emit predetermined light, and
wherein the projection device project a light pattern in synchronization with light emission of the lamp.

6. The projection device according to claim 5, wherein the lamp is an auxiliary lamp including a turn signal lamp of the vehicle.

7. The projection device according to claim 4, wherein the projection lens of the short-distance side projection unit is configured to be disposed at a greater forward inclination angle in a vertical direction than the projection lens of the long-distance side projection unit.

8. The projection device according to claim 4, wherein the short-distance side projection unit is configured to project, as the short-distance side light pattern, a nearby light pattern that is projected onto a road surface close to the vehicle, and a central light pattern that is projected onto a road surface farther away than the nearby light pattern.

9. The projection device according to claim 4,
wherein the long-distance side projection unit includes:
a first projection unit configured to project a first light pattern; and
a second projection unit configured to project a second light pattern, and
wherein the long-distance side projection unit combines the first light pattern and the second light pattern to project the predetermined long-distance side light pattern.
